# EUROPEAN PATENT APPLICATION

(11) **EP 4 640 478 A1**
(43) Date of publication of application: **29.10.2025**
(21) Application number: 25167083.2
(22) Date of filing: 28.03.2025
(51) Int. Cl.: B60L 53/14, B60L 53/30, B60L 53/51, B60L 53/53, B60L 53/63, B60L 53/66, H02J 7/00, H02J 7/35

(54) **TRANSPORTABLE MICROGRID/NANOGRID SYSTEM**

(30) Priority: 25.04.2024 US 202463638781 P; 27.03.2025 US 202519092370
(71) Applicant: DS2.0, LLC, Portland, TN 37148 (US)
(72) Inventor: SOLON, Dean, Portland, 37148 (US)
(74) Representative: Fish & Richardson P.C.

(57) **Abstract**

Systems and apparatus for implementing a mobile energy system. In one aspect, a mobile energy system includes a cabinet having an interior space defined by an outer surface of the cabinet, where the interior space can include a battery storage area configured to receive a battery energy storage system having at least 2kWh of storage capacity. The mobile energy system can also include an item storage area configured to receive and store one or more other items, a connector configured to connect a battery energy storage system located in the battery storage area to an external power source, and a charging cable configured to connect the battery energy storage system to a charging port of an electric vehicle.

## Description

### CLAIM OF PRIORITY

This application claims the benefit of priority to U.S. Provisional Application Serial No. 63/638,781, filed on April 25, 2024, and U.S. Patent Application Serial No. 19/092,370, filed on March 27, 2025 the entire contents of which are hereby incorporated by reference.

### BACKGROUND

This specification relates to power solutions, such as microgrid/nanogrid systems. A microgrid/nanogrid system is capable of providing electric energy to recharge the battery of an electric vehicle. For example, the microgrid/nanogrid system can provide power to an EV charging system. A charging port physically connects the charging system to the EV and enables power to flow to the EV battery by way of a cord that connects the EV charging port to a charger of the EV charging system.

### SUMMARY

In general, one innovative aspect of the subject matter described in this specification can be embodied in a mobile energy system that includes a cabinet having an interior space defined by an outer surface of the cabinet, wherein the interior space includes: (i) a battery storage area configured to receive a battery energy storage system having at least 2kWh of storage capacity; and (ii) an item storage area configured to receive and store one or more other items. The mobile energy system can also include a connector configured to connect a battery energy storage system located in the battery storage area to an external power source; and a charging cable configured to connect the battery energy storage system to a charging port of an electric vehicle. Other embodiments of this aspect include corresponding methods and apparatus.

These and other embodiments can each optionally include one or more of the following features. The mobile energy system can have the battery energy storage system located in the battery storage area.

The mobile energy system can include wheels attached to a bottom of the cabinet.

The mobile energy system can include one or more drawers located in the item storage area. The battery storage area can be located between a back of the cabinet and the one or more drawers. The battery storage area can be located between a bottom of the cabinet and the one or more drawers.

The connector can be an NACS connector.

The mobile energy system can include an inverter that is connected between the battery energy storage system and the connector. The connector can be configured to connect the battery energy storage system to a solar power system.

The mobile energy system can include an energy management apparatus configured to exchange data with (i) the battery energy storage system, (ii) the electric vehicle, (iii) a solar power system, and an electric power grid. The energy management apparatus can be configured to change an amount of power drawn from each of the electric power grid and the solar power system based on the exchanged data. The energy management apparatus can be configured to perform operations including: collecting peak usage data for the electric power grid; and reducing the amount of power drawn from the electric power grid during peak usage times based on the peak usage data.

The energy management apparatus can be configured to perform operations including: increasing the amount of power drawn from the solar power system or the battery energy storage system during the peak usage times, wherein the amount of power drawn from the solar power system or the battery energy storage system is based on a difference between a current load requirement and the amount by which the power drawn from the electric power grid is reduced.

The energy management apparatus can be configured to electrically isolate the mobile energy system from the electric power grid.

The details of one or more embodiments of the subject matter described in this specification are set forth in the accompanying drawings and the description below. Other features, aspects, and advantages of the subject matter will become apparent from the description, the drawings, and the claims.

### BRIEF DESCRIPTION OF THE DRAWINGS

FIG. 1 is a is an illustration of a vehicle connected to a traditional EV charging station.
FIGs. 2A-2C are illustrations of an example mobile energy system.
FIGs. 3A-3C are illustrations of another example mobile energy system.
FIG. 4 is an illustration showing another example mobile energy system connected to a power system.

Like reference numbers and designations in the various drawings indicate like elements.

### DETAILED DESCRIPTION

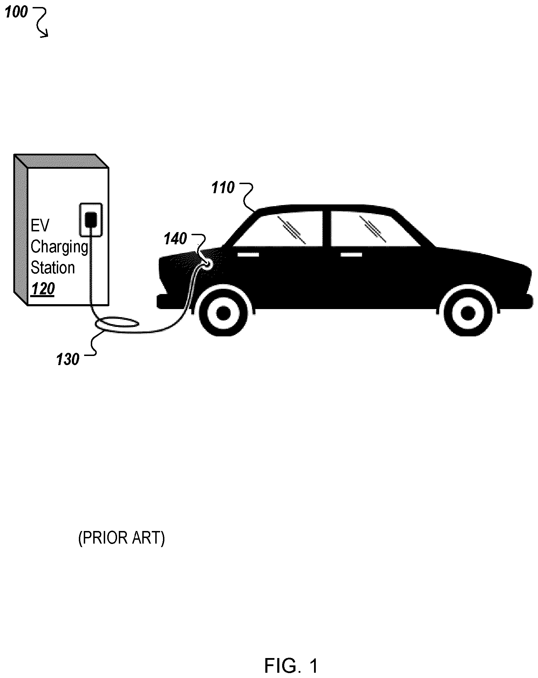

FIG. 1 is an illustration 100 of an electric vehicle (EV) 110 connected to a traditional charging station 120, also referred to as an EV charger or charging station. As shown, the charging station 120 has a charging cord 130 that connects to a charging port 140 of the charging station 120. The charging port 140 is configured to physically connect the charging station 120 to the EV 110. In some situations, the EV charging station 120 can be powered by a microgrid/nanogrid power system.

Usually, the charging station 120 is fixed in place. For example, at public charging locations, the charging station 120 is secured to the ground (e.g., asphalt/concrete) using, for example, bolts or other fasteners. Similarly, in private charging stations, the charging station 120 is bolted to a wall or another immovable structure. Furthermore, conventional installations of the charging station 120 would include permanent electrical connections to the power source. For example, when installed in a private garage, the charging station 120 would have a dedicated power line installed to the location at which the charging station 120 was mounted to a wall, and the dedicated power line would be securely connected to power terminals within the charging station 120.

When the charging station 120 is secured and wired as discussed above, it is impractical to move the charging station 120 to a different location as needed. For example, assume that the charging 120 is installed on a wall of a garage (e.g., bolted to the wall), and a dedicated power line is connected to power terminals inside the outer case of the charging station 120. In this situation, moving the charging station 120 would require the removal of the power connections, as well as the removal of the charging station 120 from the wall. Additionally, the charging station 120 would then need to be remounted (e.g., bolted) to the wall at the new location (e.g., a new location of a same residence or a new residence), and a new dedicated power line would need to be run to the new location of the charging station 120. In situations where the charging station 120 is powered by a microgrid/nanogrid system, the microgrid/nanogrid system is similarly installed in a fixed location, such that the microgrid/nanogrid system is also not easily relocatable. Thus, is not considered transportable/portable.

To facilitate easier relocation of a charging station, the charging station can be implemented as part of a transportable microgrid/nanogrid station (not shown). The transportable microgrid/nanogrid station is a device/system that is configured to connect and control multiple different power sources to multiple power loads and manage the power behind-the-meter (BTM) in grid-connected systems as well as off-grid systems. The transportable microgrid/nanogrid station can include power generation equipment as well as EV charging equipment. For example, the transportable microgrid/nanogrid station can include, or be configured to connect to, a generator set ("Genset"), a solar array, DC battery system, and can include, or be configured to connect to, a uni-directional or bi-directional EV charging system.

The transportable microgrid/nanogrid station discussed herein is configured to enable plug and play functionality using connectors that easily connect the transportable microgrid/nanogrid station to a power source, and enable the ability to disconnect the transportable microgrid/nanogrid station from the power source without having to access power terminals inside of the transportable microgrid/nanogrid station. As described in more detail below, the transportable microgrid/nanogrid station can also provide other utility beyond the ability to charge EVs. For example, the transportable microgrid/nanogrid station can be housed in a cabinet 201 or another structure that includes storage space for other items beyond a battery energy storage system and/or related EV charger components. In a specific example, the structure housing the battery energy storage system of the transportable microgrid/nanogrid station can include drawers and/or cabinet doors that enable the storage of other items (e.g., tools or other household items) in an item storage area of the structure. The transportable microgrid/nanogrid station can also have wheels that are connected to the bottom of the structure housing the battery energy storage system, which configures the transportable microgrid/nanogrid station to be rolled around, thereby making relocation of the transportable microgrid/nanogrid station easier. For brevity, the transportable microgrid/nanogrid station will be referred to as a mobile energy system.

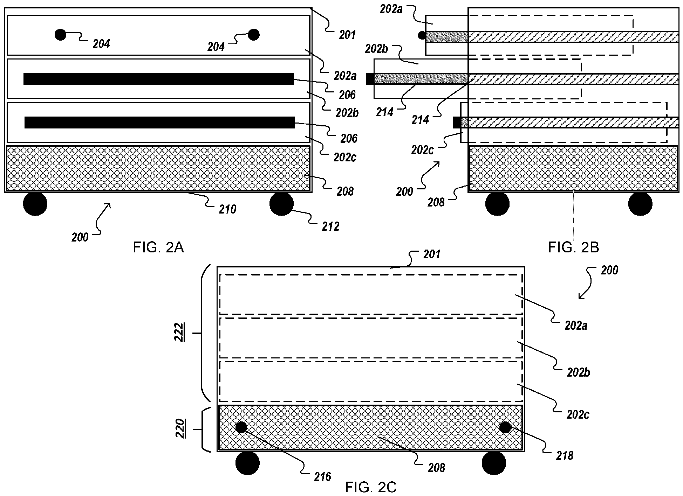

FIGs. 2A-2C are illustrations of an example mobile energy system 200. More specifically, FIG. 2A is a front view of the mobile energy system 200, FIG. 2B is a side view of the mobile energy system 200, and FIG. 2C is a back view of the mobile energy system 200. FIG. 2A shows the front of three drawers 202a, 202b, and 202c that are located within an interior area of the mobile energy system 200. The drawer 202a is shown with two knobs 204, while the drawers 202b and 202c are shown with respective handles 206 to facilitate opening and closing of the drawers 202a, 202b, and 202c.

The mobile energy system 200 is also configured to house a DC battery system with bi-directional DC/AC inverter that is connected to a battery energy storage system 208. The battery energy storage system 208 can have a single battery, or a series of interconnected batteries. Adding more batteries to the battery energy storage system 208 can increase the overall storage capacity of the battery energy storage system 208. In some implementations, the storage capacity of the battery energy storage system 208 is at least 2kWh, and can have 60kWh or more storage capacity. Other example capacities are 5kWh, 10kWh, or any other capacity that can be selected based on the application. The battery energy storage system 208 is located in an interior space of the mobile energy system 200, and specifically in a battery storage area that is configured to receive and store the battery energy storage system. As shown in FIG. 2A, the battery energy storage system 208 is located between a bottom 210 of the mobile energy system 200 and the lowest drawer 202c. The size of the battery storage area required to house the battery energy storage system 208 and the amount of space occupied by the battery energy storage system 208 will depend on the specific batteries used in the battery energy storage system, as well as the desired total charge capacity.

The mobile energy system 200 includes a set of wheels 212 that are attached to the bottom (e.g., a bottom surface) of the mobile energy system 200. The set of wheels 212 can be bolted, or otherwise affixed, to the bottom of the mobile energy system 200. The set of wheels 212 enable the mobile energy system 200 to be easily moved from one location to another. In some implementations, set of wheels 212 can include a locking mechanism or brake that prevents the wheels from moving. In this way, inadvertent movement of the mobile energy system 200 can be prevented.

FIG. 2B is a side view of the mobile energy system 200. In this figure, the drawers 202a-202c are shown at various stages of insertion into/extension from the interior (e.g., item storage area) of the mobile energy system 200. Each of the drawers 202a-202c can be slidably attached to the sides of the mobile energy system 200 by way of drawer slides 214, or other appropriate hardware. The drawer slides 214 are shown as side mount drawer slides, but bottom mount drawer slides can also be used.

FIG. 2C is a rear view of the mobile energy system 200. In this view, the three drawers 202a-202c are again depicted, as is the battery energy storage system 208. This view also depicts a connector 216 and a connector 218 of the mobile energy system 200. The connectors 216 and 218 are configured to provide an electrical connection between the battery energy storage system 208 and external devices. For example, the connector 216 can be a power input connector that is configured to connect the battery energy storage system 208 to an external power source, thereby enabling charging of the battery energy storage system 208. For example, the connector 216 can connect the battery energy storage system 208 to an AC power source or a DC power source.

The connection to the AC power source can be, for example, a connection to the electric power grid. In some implementations, the connection to the electric power grid can be a connection to the utility power service to a home. For example, the connector 216 can be configured to interface with an outlet of an appropriate voltage/amperage for input to the mobile energy system 200. For example, the voltage can be anywhere from 110 volt single phase power circuit up to 480V three phase power circuit, and the amperage can be between 10-300 amps.

The connection to the DC power source can be a connection to a photovoltaic ("PV") solar array. For example, the connector can be configured to connect to the DC output of the solar panels. Alternatively, or additionally, the connection to the DC power source can be a connection to another battery bank (e.g., storing power from the PV solar array).

In some implementations, connector 216 can be a standard EV charging connector or another connector. Examples of EV charging connectors include (but are not limited to):
1. J1772 Connector: This is a Level 2 charging connector that is used in North America, and it provides up to 240V of power. It features a standard five-pin configuration and is compatible with many EVs on the market.
2. CCS Connector: This is a Combined Charging System connector that can support both Level 2 and DC fast charging. It features a two-pin DC charging connector that is located below the Level 2 charging connector. The CCS connector is commonly used in North America, Europe, and Asia.
3. CHAdeMO Connector: This is a Level 3 DC fast charging connector that is primarily used in Japan and Europe. It features a unique design that includes a large, circular connector with two small pins at the bottom.
4. Tesla Connector: This is a proprietary charging connector used exclusively by Tesla vehicles. It supports Level 2 and Level 3 DC fast charging and features a unique six-pin configuration.
5. Type 2 Connector: This is a European standard charging connector that supports both Level 2 and DC fast charging. It features a seven-pin configuration and is commonly used in Europe.
6. GB/T Connector: This is a Chinese national standard charging connector that supports both Level 2 and DC fast charging. It features a nine-pin configuration and is commonly used in China.
7. North American Charging Standard ("NACS") Connector: This is a charging connector system developed by Tesla, Inc., and uses a five pin layout in which the two primary pins are used for both AC charging and DC fast charging. This connector is in the process of being standardized as SAE J3400.

The connector 216 can have a pin configuration that matches one of the configurations described above, or another configuration. As such, a standard EV connector can be plugged into the connector 216 to facilitate the connection between the external power source and the battery energy storage system 208 to facilitate charging of the battery energy storage system 208. In this way, the mobile energy system 200 can be configured to be plug and play by using a connectorized connection to the external power source. This also facilitates the ability to quickly disconnect the battery energy storage system 208 from the external power source (e.g., to relocate the mobile energy system 200).

The connector 218 can be an output connector that is configured to connect the battery energy storage system 208 to an EV (or another device) to charge the EV (or the other device). Similar to the discussion above, the connector 218 can be a standard EV connector (or another connector) that enables one end of a connectorized charging cable to be plugged into the connector 218, and the other end of the connectorized charging cable to be plugged into an EV charging port, thereby transferring charge from the battery energy storage system 208 to the EV.

FIG. 2C also delineates the areas of the mobile energy system 200 cabinet that are designated the battery storage area 220 and the item storage area 222. The battery storage area 220 is an interior portion of the mobile energy system 200 that is configured to receive the battery energy storage system 208. The item storage area 222 is an interior portion of the mobile energy system 200 that is configured to receive other items (i.e., items other than the battery energy storage system 208). As discussed above, the item storage area 222 can be configured to receive the drawers 202a-202c, shelves, or other items. In some implementations, the item storage area 222 is accessible by way of the drawers 202a-202c and/or cabinet doors that can be attached to the front of the mobile energy system 200 using hinges or other appropriate hardware. In some implementations, the battery storage area 220 and the item storage area 222 are separate by a physical barrier (e.g., a wall or shelf made of metal, plastic, wood, or another appropriate material), such that two distinct areas are defined irrespective of whether the battery energy storage system 208, drawers 202a-c, or other items have been inserted into either of the areas. Separating these distinct areas using a physical barrier can protect the battery energy storage system 208 from damage or contamination from items in the item storage area 222.

In some implementations, the battery storage area 220 and the item storage area 222 can be at least partially open to each other, while still being delineated by other features of the cabinet 201. For example, dimensions of the battery storage area 220 can be different from the item storage area 222, and the dimensional changes of the interior of the cabinet 201 can be a point at which the two areas are delineated. For example, the battery storage area 220 can have dimensions, connectors, or other features that facilitate the storage of the battery energy storage system 208 in the battery storage area 220, while the item storage area 222 can have dimensions that facilitate the insertion of items other than the battery energy storage system 208 (e.g., drawers, shelves, etc.).

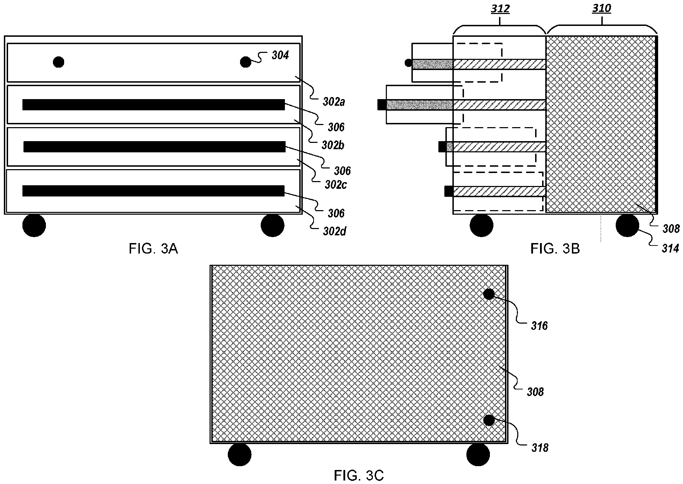

FIGs. 3A-3C are illustrations of another example mobile energy system 300. More specifically, FIG. 3A is a front view of the mobile energy system 300, FIG. 3B is a side view of the mobile energy system 300, and FIG. 3C is a back view of the mobile energy system 300. FIG. 3A shows the front of 4 drawers 302a, 302b, 302c, and 302d that are located within an interior area of the mobile energy system 300. The drawer 302a is shown with two knobs 304, while the drawers 302b, 302c, and 302d are shown with respective handles 306 to facilitate opening and closing of the drawers 302a, 302b, 302c, and 302d. This is a similar configuration as described with reference to the mobile energy system 200.

One difference between the mobile energy system 200 and the mobile energy system 300 is that the mobile energy system 300 depicts the drawer 302d at the bottom of the mobile energy system 300 instead of a battery energy storage system. Rather, as shown in FIG. 3B, the mobile energy system 300 has a battery energy storage system 308 that is located behind the drawers 302a-302d, at (or near) the back of the mobile energy system 300 (e.g., near a surface of the mobile energy system 300 that is opposite drawer/cabinet openings in the mobile energy system 300). In this configuration, the battery energy storage system 308 is located in a battery storage area 310 that is located behind the drawers 302a-302d, and arranged to occupy more vertical space (e.g., from top to bottom) than horizontal space (e.g., from front to back) within the mobile energy system 300. This is in contrast to the mobile energy system 200 in which the battery storage area 220 was configured more horizontally (e.g., with larger dimensions from a front to a back of the mobile energy system 200) than vertically. Other configurations of the battery storage area 220 or 310 are possible as well.

In FIG. 3B, the item storage area 312 is again in a front of the mobile energy system 300, with the drawers extendible out of the front of the mobile energy system 300. The mobile energy system 300 again has a set of wheels 314 that are attached to a bottom of the mobile energy system 300, support the mobile energy system 300 above the ground, and facilitate the easy movement/relocation of the mobile energy system 300.

FIG. 3C shows the back of the mobile energy system 300, and example locations of two connection points 316 and 318. The two connection points can be two connectors similar to those discussed above with reference to FIG. 2C. For example, the connection point 316 can be a connector that enables a standard EV plug to be connected to the mobile energy system 300. In some implementations, the connection point 316 is an output connection point that is configured to connect the battery energy storage system 308 to an EV to charge the EV. Meanwhile, the connection point 318 can be a power input connector that is configured to connect the battery energy storage system 308 to a power source to charge the battery energy storage system, as discussed with reference to FIG. 2C.

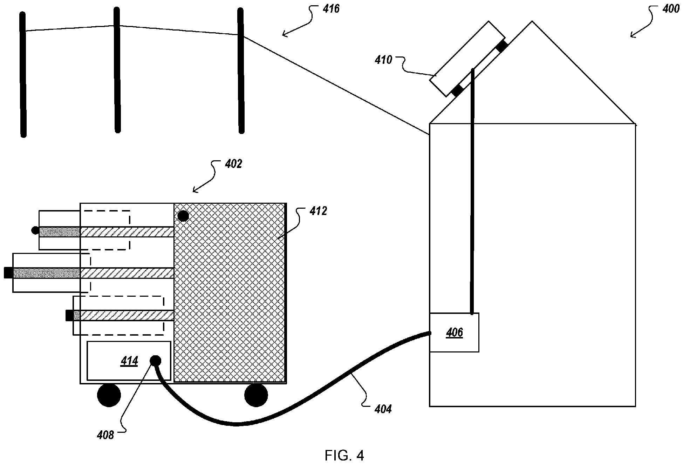

FIG. 4 is an illustration 400 showing another example mobile energy system 402 connected to a power system of a residence (or another structure). More specifically, a cable 404 is connected at a first end to the mobile energy system 402, and connected at the other end (i.e., a second end) to a junction box 406. The first end of the cable 404 can be connectorized, and therefore, plugged into a connector 408 on the mobile energy system 402, as discussed above. The second end of the cable 404 can also be connectorized and plugged in to a connector of the junction box 406 to provide plug and play connections between the mobile energy system 402 and the power system of the residence. Alternatively, the cable 404 can be hardwired to the mobile energy system 402 and/or the power system of the residence.

The junction box 406 can be configured to directly connect the mobile energy system 402 to the power system of the residence, or the junction box 406 can include one or more components that transform power from one state to another before being transferred to the mobile energy system 402 by way of the cable 404. For example, assume that the junction box 406 is simply a connection point that electrically connects the mobile energy system 402 to a solar power system 410 of the residence. In this example, the DC power from the solar power system 410 can be directly provided to the mobile energy system 402, thereby charging the battery energy storage system 412 of the mobile energy system 402 using the solar power generated by the solar power system 410.

In some implementations, the power at the junction box 406 has already been converted to AC power, for example, by an inverter of the solar power system 410. In these implementations, the AC power from the inverter of the solar power system 410 can be transferred to the mobile energy system 402 by way of the cable 404. To facilitate charging of the battery energy storage system 412, the mobile energy system 402 can include power conditioning hardware 414 (e.g., a rectifier, transformer, and/or other power conditioning hardware) to convert the AC power from the junction box 406 to DC power that can charge the battery energy storage system 412.

In some implementations the junction box 406 can be a standard electrical panel of the residence. In these implementations, the AC power from the electrical panel can again be transferred to the mobile energy system 402 by way of the cable 404. To facilitate charging of the battery energy storage system 412, the mobile energy system 402 can again include power conditioning hardware 414 (e.g., a rectifier, transformer, inverter, and/or other power conditioning hardware) that is connected between the battery energy storage system 412 and the connector 408 to convert the AC power from the junction box 406 to DC power that can charge the battery energy storage system 412. In the event that DC power is received at the connector 408, and needs to be converted to AC power to charge the battery energy storage system, the conditioning hardware can include the inverter and//or other power conditioning hardware mentioned above.

In some implementations, an energy management apparatus can be included as part of the mobile energy system 402. The energy management apparatus includes one or more processors (e.g., computer hardware) that is configured to exchange data with one or more of (i) the battery energy storage system 412, (ii) an electric vehicle connected to the mobile energy system 402 (or registered with the energy management apparatus), (iii) the solar power system 410, and/or a electric power grid 416 that provides power to the residence (e.g., from a utility company). For example, the energy management apparatus can include wired and/or wireless communication components that enable communication over wired network links (e.g., Ethernet) and/or wireless network links (e.g., BLUETOOTH ^{®}, WIFI ^{®}, or another wireless communications standard). The energy management apparatus can also be configured to communicate over a Controller Area Network bus ("CANbus"), which is a vehicle bus standard designed to allow devices to communicate and exchange data without a host computer.

Using the information obtained from the (i) the battery energy storage system 412, (ii) the electric vehicle connected to the mobile energy system 402 (or registered with the energy management apparatus), (iii) the PV solar array 410, and/or the electric power grid 416 that provides power to the residence, the energy management apparatus is configured to change an amount of power drawn from each of the electric power grid 416 and the solar power system 410. For example, the energy management apparatus can collect peak usage data from the electric power grid 416 (e.g., times at which load is higher than average, or otherwise elevated to some baseline load), and reduce the amount of power drawn from the electric power grid 416 during peak usage times. During these peak times, the energy management apparatus is also configured to increase the amount of power drawn from the solar power system 410 (or the battery energy storage system 412) during the peak usage times. For example, the amount of power drawn from the solar power system 410 or the battery energy storage system 412 can be based on the difference (e.g., mathematical difference) between a current load requirement and the amount by which power drawn from the electric power grid 416 is reduced. In other words, the energy management apparatus can increase the amount of power drawn from the solar power system 410 or the battery energy storage system 412 to replace the amount of power that is no longer being drawn from the electric power grid 416 to meet the current load (e.g., the amount of power required to power the devices connected at the residence).

The energy management apparatus can also be configured to reduce the current load by sending instructions to one or more of EV chargers (e.g., in the mobile energy system 402) or EVs to refrain from charging during specified times (e.g., peak usage times). For example, when the energy management apparatus detects that the current load on the electric power grid 416 is approaching a specified upper threshold, the energy management apparatus 416 can transmit "no-charge" instructions to the mobile energy system 402 and/or an EV. The "no-charge" instructions can include, for example, a set of commands (e.g., code) that causes the mobile energy system 402 and/or the EV to refrain from charging for a period of time or until a specified condition is met (e.g., the load on the electric power grid 416 falls below the upper threshold or another lower threshold).

Furthermore, the energy management apparatus can be configured to trigger a discharge mode in which energy stored in the battery of the EV is discharged to help alleviate the current load on the electric power grid 416 (or another power source). For example, the energy management apparatus can transmit instructions to the EV that cause the EV to enter a discharge mode in which the power from the battery of the EV is made available for use as a power source to other electrical components/devices. Similarly, the energy management apparatus can send instructions to a bidirectional EV charger of the mobile energy system 402 that cause the bidirectional charger to carry power from the EV battery to other components/devices connected to the cable 404.

In some implementations, the energy management apparatus (or another component of the mobile energy system 402) can be configured to operate in an "off-grid" mode. The "off-grid" mode is a mode in which the mobile energy system 402 is electrically isolated from the electric power grid 416, such that the mobile energy system is operating independent of the electric power grid 416. In this mode, the mobile energy system 402 could obtain all of its power from the solar power system 410, another green energy source (e.g., wind, water, etc.), a generator, or another independent power source. For example, the energy management apparatus can toggle a switch that disconnects the mobile energy system 402 from being electrically connected to the electric power grid 416.

The energy management apparatus can be located in the junction box 406, included as part of the power conditioning hardware 414 located in the mobile energy system 402, or located in another location. In some implementations, the energy management apparatus can be configured to charge the battery energy storage system 412 at times when the load demand on the electric power grid 416 and/or solar power system 410 is lower than a specified amount (e.g., at least 50% of the peak load demand, or another specified amount below the peak load demand), thereby ensuring that the charging of the battery energy storage system 412 does not overload the electric power grid 416 and/or the solar power system 410. By restricting the charging of the battery energy storage system 412 to periods of time that are outside of peak load times, the cost to charge the battery energy storage system 412 will also generally be lower.

In some implementations, the energy management apparatus can be configured to manage "vehicle to everything" ("V2X") functionality. V2X refers to transferring power stored in the EV battery to other devices or systems. For example, the power stored in the EV can be transferred to the battery energy storage system 412, the electric power grid 416, the solar power system 410, and/or the residence (e.g., the AC panel of the residence or other structure). To facilitate the implementation of V2X functionality, the mobile energy system 402 (e.g., the power conditioning hardware 414) can include a bidirectional charger that is configured to charge the battery energy storage system 412 using power from the EV connected to the mobile energy system 402, and also configured to charge the EV connected to the mobile energy system 402.

A communications link between the bidirectional charger and the EV can be a V2G compliant communications protocol, such as International Organization for Standardization ("ISO") 15118 or Open Charge Point Protocol ("OCPP") 2.0.1. Other appropriate communications protocols can also be used. The communications link can facilitate the exchange of information, such as an amount of charge available in the EV, an amount of charge available in the battery energy storage system 412, a current load on the electric power grid 416, an amount of stored power for the solar power system 410 and/or other information. The energy management apparatus can use the information obtained using the communications link and/or send instructions over the communications link to adjust the direction of power flow (e.g., from the battery energy storage system 412 or another source to the EV or from the battery energy storage system 412 or another power source to the EV) based on the present and expected load conditions. In other words, the energy management apparatus can perform load balancing based on the obtained information.

In some implementations, the energy management apparatus can be configured to perform real-time load balancing and/or predictive load balancing. For example, the energy management apparatus can perform real-time load balancing by monitoring load conditions for the various power sources, and adjust the charging of the battery energy storage system 412 and/or EV based on real-time changes that are occurring. The real-time load balancing capability enable the mobile energy system 402 to react to detected changes in load demand and/or power supply conditions that may be intermittent or temporary.

For example, assume that a tree takes down a power line from the electric power grid 416, and the weather is becoming cloudy with a forecast of clouds for the next 24 hours. In this situation, the energy management apparatus can determine that the supply from the electric power grid 416 will be interrupted for a period of time, and that the solar power system 410 will be generating power at a lower than max capacity for a period of time. In response to this determination, the energy management apparatus can determine how to adjust the power distribution to reduce the impact of the interruption to the power supply in a way that reduces the demand over the interruption period. For example, the energy management apparatus can use the V2X capability to transfer power from the EV to the battery energy storage system 412 (or another device or system) to make up for the sudden reduction in available power from the electric power grid 416 and the solar power system 410. Similarly, the energy management apparatus can use power from the battery energy storage system 412 as a power source for the residence (or other structure) during the power interruption. In this way, the energy management apparatus can react to unexpected events by adjusting the flow of power through the mobile energy system 402 to optimize the use of available power.

The energy management apparatus can also be configured to perform predictive load management. Predictive load management differs from real-time load management in that the predictive load management generates a future plan as to how the flow of power will be adjusted based on historical information (e.g., load demand and/or power availability). For example, the energy management apparatus can use historical load information from the electric power grid 416 to determine when the battery energy storage system 412 and/or EV will be charged, and/or when power from the battery energy storage system 412 and/or EV should be made available to power devices in the residence (or other structure). The predictive load management plan generated by the energy management apparatus can be carried out as generated, for example, when real-time events do not significantly change the assumptions upon which the predictive load management plan was generated. However, when real-time events materially affect the assumptions on which the plan was generated, the real-time load management capabilities of the energy management apparatus can adjust the predictive load management plan, as discussed above.

The energy management apparatus can also be configured to perform load balancing when a single-phase load (e.g., a single-phase EV charger) to a three-phase power source. For example, the energy management apparatus can distribute the single-phase load across the three phases of the power source such that each phase of the power source is carrying a balanced or same load (e.g., within a specified tolerance level). More specifically, the energy management apparatus can determine the magnitude of the single-phase load that is being connected to the three-phase power source, and distribute substantially equal portions of the single-phase load across the three phases of the power source. In situations where multiple single-phase loads are connected to the three-phase power source, the energy management apparatus can also be configured to consider the power factors of the different single-phase loads when performing the load balancing. For example, the energy management apparatus can be configured to perform power factor correction (e.g., using capacitors and/or inductors) across the single-phase loads.

In some implementations, the mobile energy system 402 can include a battery management system/device 418, which can be a separate system or part of the energy management apparatus. The battery management system 418 includes one or more processors (or other computing devices) and a set of sensors (e.g., voltage sensors, current sensors, temperature sensors, etc.) that are configured to monitor the battery energy storage system 408, analyze a state or operational capacity of the battery energy storage system 408, provide protection against various conditions, and/or take corrective action to prevent dangerous conditions. For example, the battery management system 418 can be configured to measure and calculate the remaining capacity of the battery energy storage system 408 (e.g., State of Charge) over time.

Using the determined remaining capacity enables the battery management system 418 to provide information to a user as to the current state of charge of the battery energy storage system 408, as well as manage the charging/discharging of the battery energy storage system 408. For example, the battery energy storage system 408 can use the determined current state of charge to ensure that the battery energy storage system 408 is not overcharged or over-discharged, thereby extending the life of the battery energy storage system 408.

The determined remaining capacity can also be used by the battery management system 418 to control when the battery energy storage system 408 is charged and/or used to provide supplemental power to components at the location (e.g., the power system of a residence). For example, when the battery management system 418 determines that the battery the charging of the battery energy storage system 408 has more than a specified amount of charge, charging of the battery energy storage system 408 can be delayed until the load on the electric power grid 416 is below a specified threshold, thereby reducing the energy generation demands for the electric power grid 416 and/or obtaining lower cost power to recharge the battery energy storage system 408.

The battery management apparatus 418 can also be configured to monitor the health/performance of the battery energy storage system 408, for example, by determining whether the battery energy storage system 408 has experienced capacity degradation over time. In some situations, the capacity degradation can be determined by comparing a current charging capacity to a prior charging capacity. This capacity degradation information can be used, potentially in combination with internal resistance measurement changes over time, to predict a remaining lifespan of the battery and report that information to the energy management apparatus and/or a user (e.g., through a user interface or wireless device).

The battery management apparatus 418 can also be configured to perform cell balancing to ensure that different cells of the battery energy storage system 408 have similar voltage levels and charge states. Performing cell balancing can help maintain the capacity of the battery energy storage system 408 and/or lifespan of the battery energy storage system 408, for example, by reducing the likelihood that certain cells are overcharged or undercharged because of an imbalance between the cells.

The battery management apparatus 418 can also be configured to maintain the battery energy storage system 408 within a specified operating temperature range. For example, the battery management apparatus 418 can monitor the temperature of the battery energy storage system 408 and/or an interior of the mobile energy system 402 and adjust charging/discharging operations when the temperature is approaching an upper/lower limit of (and/or falls outside of) the specified operating temperature range. In this way, the battery management apparatus 418 can change the amount of heat being generated by the battery energy storage system 408 to keep the temperature within the specified operating range.

The battery management apparatus 418 can also include voltage protection circuitry and/or logic that protects the battery energy storage system 408 from overvoltage and undervoltage conditions. For example, the battery management apparatus 418 can disconnect the battery energy storage system 408 from power or limit charging of the battery energy storage system 408 when the voltage exceeds a specified upper threshold. Similarly, the battery management apparatus 418 can limit/stop discharging of the battery energy storage system 408 when the detected voltage falls below a lower threshold.

While this specification contains many specific implementation details, these should not be construed as limitations on the scope of any inventions or of what may be claimed, but rather as descriptions of features specific to particular embodiments of particular inventions. Certain features that are described in this specification in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially claimed as such, one or more features from a claimed combination can in some cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results.

Thus, particular embodiments of the subject matter have been described. Other embodiments are within the scope of the following claims. In some cases, the actions recited in the claims can be performed in a different order and still achieve desirable results. In addition, the processes depicted in the accompanying figures do not necessarily require the particular order shown, or sequential order, to achieve desirable results. In certain implementations, multitasking and parallel processing may be advantageous.

## Claims

1. A mobile energy system comprising:
a cabinet having an interior space defined by an outer surface of the cabinet, wherein the interior space comprises:
a battery storage area configured to receive a battery energy storage system having at least 2kWh of storage capacity; and
an item storage area configured to receive and store one or more other items;
a connector configured to connect a battery energy storage system located in the battery storage area to an external power source; and
a charging cable configured to connect the battery energy storage system to a charging port of an electric vehicle.

2. The mobile energy system of claim 1, further comprising the battery energy storage system located in the battery storage area.

3. The mobile energy system of any preceding claim, further comprising wheels attached to a bottom of the cabinet.

4. The mobile energy system of any preceding claim, further comprising one or more drawers located in the item storage area.

5. The mobile energy system of claim 4, wherein the battery storage area is located between a back of the cabinet and the one or more drawers.

6. The mobile energy system of claim 4 or claim 5, wherein the battery storage area is located between a bottom of the cabinet and the one or more drawers.

7. The mobile energy system of any preceding claim, wherein the connector comprises an NACS connector.

8. The mobile energy system of any preceding claim, further comprising an inverter that is connected between the battery energy storage system and the connector.

9. The mobile energy system of any preceding claim, wherein the connector is configured to connect the battery energy storage system to a solar power system.

10. The mobile energy system of any preceding claim, further comprising an energy management apparatus configured to exchange data with i) the battery energy storage system, ii) the electric vehicle, iii) a solar power system, and an electric power grid.

11. The mobile energy system of claim 10, wherein the energy management apparatus is further configured to change an amount of power drawn from each of the electric power grid and the solar power system based on the exchanged data.

12. The mobile energy system of claim 11, wherein the energy management apparatus is further configured to perform operations comprising:
collecting peak usage data for the electric power grid; and
reducing the amount of power drawn from the electric power grid during peak usage times based on the peak usage data.

13. The mobile energy system of claim 11 or 12, wherein the energy management apparatus is further configured to perform operations comprising:
increasing the amount of power drawn from the solar power system or the battery energy storage system during the peak usage times, wherein the amount of power drawn from the solar power system or the battery energy storage system is based on a difference between a current load requirement and the amount by which the power drawn from the electric power grid is reduced.

14. The mobile energy system of claim 10, 11, or 12, wherein the energy management apparatus is further configured to electrically isolate the mobile energy system from the electric power grid.
